(19) Europäisches Patentamt
European Patent Office
Office européen des brevets

(11) Veröffentlichungsnummer: **0 358 221**
**A2**

(12) **EUROPÄISCHE PATENTANMELDUNG**

(21) Anmeldenummer: 89116586.2

(22) Anmeldetag: 08.09.89

(51) Int. Cl.5: **C09D 5/44**

(30) Priorität: 09.09.88 DE 3830626

(43) Veröffentlichungstag der Anmeldung:
14.03.90 Patentblatt 90/11

(84) Benannte Vertragsstaaten:
AT BE CH DE ES FR GB GR IT LI NL SE

(71) Anmelder: Herberts Gesellschaft mit
beschränkter Haftung
Christbusch 25
D-5600 Wuppertal 2(DE)

(72) Erfinder: Grütter, Roland, Dr.
Cordulastrasse 14
D-5600 Wuppertal 1(DE)
Erfinder: Böhmert, Reiner
Feldstrasse 46
D-5657 Haan(DE)
Erfinder: Jaeger, Kurt-Edgar
Ravensbergerstrasse 9
D-5600 Wuppertal 1(DE)
Erfinder: Huth, Hans-Ullrich, Dr.
Finkenweg 6
D-6073 Engelsbach(DE)

(74) Vertreter: Türk, Gille, Hrabal
Bruckner Strasse 20
D-4000 Düsseldorf 13(DE)

(54) Verfahren zur Herstellung von schlagfesten Überzügen sowie elektrisch abscheidbare wässrige Tauchlack-Überzugszusammensetzung.

(57) Die Kraterbildung bei Elektrotauchbeschichtungen wurde bisher durch Pigmentzugabe oder Zugabe von Acrylatharzen verhindert. Hierdurch wurde die Haftung des nachfolgenden Lackes negativ beeinflußt. Es sollen neue Elektrotauchbad-Überzugsbeschichtungen bereitgestellt werden, die eine gute Haftung des nachfolgenden Lackes und eine gute Steinschlagresistenz gewährleisten. Dies wird durch eine Elektrotauchbad-Überzugszusammensetzung erzielt, die eine wäßrige Dispersion eines kathodisch oder anodisch abscheidbaren Harzes und Polymermikroteilchen enthält. Die Polymermikroteilchen weisen eine Glasübergangstemperatur unter +10°C auf. Es wird damit eine gute Antikraterwirkung ohne Beeinträchtigung der Haftung der Nachfolgelacke bei gutem Steinschlagschutz erzielt. Besonders geeignet sind die Überzugszusammensetzungen für die Herstellung von Grundierungen für Kraftfahrzeuge.

# Verfahren zur Herstellung von schlagfesten Überzügen, sowie elektrisch abscheidbare wäßrige Tauchlack-Überzugszusammensetzung

Die Erfindung betrifft Elektrotauch (ET)-Überzugszusammensetzungen, die ein kathodisch oder anodisch abscheidbares Harz und Polymermikroteilchen enthalten. Die Zusammensetzungen weisen eine ausgezeichnete Antikraterwirkung auf und sind widerstandsfähig gegen mechanische Beanspruchung, wie Steinschlag.

Die Elektrotauchlackierung ist ein bekanntes Verfahren zur Lackierung von elektrisch leitenden Oberflächen, wie Oberflächen von Metallen, elektrisch leitenden Kunststoffen, elektrisch leitenden Lackschichten usw. Bei diesem Verfahren werden die Lackpartikel aus dem Elektrotauchlack-Bad auf die Oberfläche des anodisch oder kathodisch geschalteten Werkstücks ausgefällt. Dieses inhomogene Koagulat muß dann während des Einbrennens zu einer homogenen glatten Beschichtung zusammenfließen. Es ist verständlich, daß bei einem derartigen Lackauftrag die Gefahr von Oberflächenstörungen recht groß ist. Dem Fachmann gelingt es nicht immer, die Bildung von Oberflächenstörungen zu vermeiden.

Ein sehr störender Effekt ist die Bildung von "Kratern" im Beschichtungsfilm. Die Ursachen zur Kraterbildung können im Bindemittel, in der Rezeptur, in Verunreinigungen, z.B. Ölspuren, und in anderen Einflüssen liegen.

Insbesondere stellt die Eliminierung von Kratern bei der Elektrotauchlackierung (ETL) ein Problem dar, dessen Lösung meist nicht aus den Erfahrungen der konventionellen Lacktechnik abgeleitet werden kann.

Die bekannten Methoden zur Beseitigung dieser Oberflächenstörung in ETL-Beschichtungen sind z.B. die Erhöhung des Pigment/Bindemittel-Gehaltes im abgeschiedenen Film, Einsatz spezieller Pigmente, Zugabe von speziellen Bindemitteln und von speziellen Antikratermitteln.

Unter Pigmenten werden bunte oder unbunte, organische und anorganische, in Lösungsmitteln und Bindemitteln praktisch unlösliche Farbmittel verstanden, die im ETL-System eine mehr oder weniger hohe oder keine Deckkraft aufweisen.

Beispiele für Pigmente sind Titandioxid, Ruß, Phthalocyaninblau, Bleisilikat, Strontiumchromat, Kaolin (Aluminiumsilikat), Talkum, Bariumsulfat und Siliciumdioxid. Pigmente, welche in der ETL-Beschichtung keine Deckkraft aufweisen, werden auch Füllstoffe genannt. Sie werden relativ oft zur Kratereliminierung verwendet (z. B. Kaolin und gefällte oder pyrogen hergestellte Kieselsäuren, letztere auch Aerosile genannt).

Die Beseitigung von Kratern durch Pigmentzugabe kann zu weniger glänzenden bis sehr matten und rauhen Oberflächen führen. Die ETL-Grundierung mit relativ hohem Pigment-Bindemittel-Verhältnis kann Ursache für schlechten Decklackstand sein.

Die Zugabe von Arylatharzen führt ebenfalls zur Verringerung bis Eliminierung der Kraterbildung. Diese Poly(meth-)acrylate, welche bisher zur Anwendung kamen, sind thermoplastisch, selbstvernetzend oder fremdvernetzende Typen, d. h. sie vernetzen erst während des Einbrennvorgangs nach dem Beschichtungsvorgang. Vor und während der Abscheidung sind sie nicht vernetzt. Ein Beispiel für ein Acrylatharz als Antikratermittel ist in der US-Patentschrift 4 812 338, Spalte 8, Example E beschrieben.

Das (Meth-)Acrylatharz kann auch in Form einer Dispersion als kraterverhinderndes Mittel zugegeben werden.

Der nachteilige Nebeneffekt der Acrylatzugabe ist die starke Verminderung der Haftung von nachfolgenden Beschichtungen auf der ETL-Schicht, besonders von PVC-Unterbodenschutz.

Die US-PS 4,423,166 beschreibt Reaktionsprodukte aus Polyepoxiden und Polyoxyalkylenpolyaminen als geeignet zur Eliminierung oder wesentlichen Verminderung von Kratern in kathodisch abscheidbaren Elektrotauchlacken. Diese Reaktionsprodukte eignen sich nicht für anodisch abscheidbare Elektrotauchlacke und bewirken außerdem eine Verschlechterung der Haftung von nachfolgend applizierten Materialien wie "sealer coats, top coats and adhesives", wie in EP-B-193 685, Spalte 1, Zeilen 50 bis 55, zu lesen ist.

In dieser EP-B-193 685 wird das Reaktionsprodukt eines Polyoxyalkylenpolyamins mit einem Monoepoxid und gegebenenfalls einem polyfunktionellen Material als Mittel zur Verbesserung der Oberflächenbeschaffenheit beschrieben, welches die Haftung des nachfolgend applizierten Materials nicht verschlechtert. Die Antikraterwirkung wird allerdings auf kathodisch abscheidbare Materialien beschränkt und ist nicht sehr effizient, wie aus Table 1 der Patentschrift, Seite 11, zu erkennen ist, wo das beste Ergebnis immer noch Krater aufweist. Dies ist sehr nachteilhaft, besonders bei Autokarosserien.

Eine weitere Maßnahme zur Entfernung von Kratern sind die Filtriermethoden, z. B. das Verfahren zur Entfernung von Oberflächenstörungen der DE-A-35 40 575. Es sind sehr aufwendige Verfahren, die nur auf die Entfernung von speziellen Verunreinigungen beschränkt sind.

Es bestand daher die Aufgabe, Antikratermittel zu finden, die sehr effizient und ohne Filtrieraufwand die

EP 0 358 221 A2

verschiedenen verursachten Krater von ETL-Beschichtungen beseitigen, die Haftung des nachfolgend applizierten Lackes nicht negativ beeiflussen, die Schlagfestigkeit, insbesondere die Steinschlagresistenz nicht verschlechtern, die Oberflächenbeschaffenheit der ETL-Beschichtung nicht negativ verändern und den Decklackstand eines mehrschichtigen Lackaufbaus nicht verschlechtern sollen.

Diese Aufgabe wird überraschend gelöst, durch die Bereitstellung von ETL-Überzugsmitteln, die enthalten:

a) eine wäßrige Dispersion eines oder mehrerer kathodisch oder anodisch abscheidbarer filmbildender Harze und

b) 0,5 bis 30 Gew.-%, bezogen auf den Feststoffgehalt, an Polymermikroteilchen mit einer Teilchengröße von 0,01 bis 10 $\mu$m und einer Vernetzungsdichte von mindestens 0,05 mmol/g, wobei die Polymermikroteilchen eine Glasübergangstemperatur (DSC) unter $+10°C$ aufweisen.

Bevorzugt liegt die Obergrenze der menge der Polymermikroteilchen unter 20 Gew.-%, besonders bevorzugt unter 15 Gew.-% (bezogen auf den Gesamtfeststoffgehalt der Zusammensetzung).

Von besonderem Vorteil ist die Möglichkeit, erfindungsgemäße Antikratermittel herzustellen, welche auch die Steinschlagresistenz und den Korrosionsschutz verbessern können.

Die Polymermikroteilchen (b) können hergestellt werden als Homopolymerisate oder Copolymerisate durch z.B. übliche Emulsionpolymerisation oder Suspensionspolymerisation, wie beispielsweise in der Chemischen Technologie von Winnacker-Küchler, Band 6, Organische Technologie II, Carl Hanser Verlag München-Wien 1982, Seiten 775 bis 787 beschrieben. Ein weiteres Herstellungsverfahren für erfindungsgemäße Polymermikroteilchen ist die Dispersionspolymerisation von Monomeren in organischen Flüssigkeiten, in welchen das resultierende Polymer unlöslich ist, wie es in der DE-C-28 18 093 beschrieben ist.

Bevorzugt werden Herstellungsmethoden, bei denen die vernetzten Polymermikroteilchen in wäßriger Dispersion entstehen.

Die vernetzten Polymermikroteilchen können in Form der nichtwäßrigen oder bevorzugt der wäßrigen Dispersion dem Elektrotauchlack-Material während oder nach dessen Herstellung zugegeben werden.

Die erfindungsgemäßen Polymermikroteilchen enthalten vorzugsweise Comonomereinheiten aus folgenden copolymerisationsfähigen Monomeren: Vinylester von $(C_1-C_{22})$-Carbonsäuren, insbesondere Vinylacetat, Vinylpropionat, Vinylversatat, Vinyllaurat; (Meth-)Acrylester von $(C_1-C_{22})$-Alkoholen, insbesondere Methylmethacrylat, Butylmethacrylat, Octylmethacrylat, Methylacrylat, Ethylacrylat, Butylacrylat, Isobutylacrylat, 2-Ethylhexylacrylat, Methacrylsäure -2,2, 3,4,4,4- hexafluorbutylester, Methacrylsäure -2,2,3,3-tetrafluorpropyl-ester oder auch fluorierte Alkylene wie Perfluorhexylethylen; Vinylaromaten mit bis zu 18 C-Atomen, insbesondere Styrol und Vinyltoluol; Vinylchlorid, Ethylen, Acrylnitril, Methacrylnitril, Diester von Maleinsäure und/oder Fumarsäure mit $C_1-C_{22}$-Alkoholen; Butadien und Vinylpyrrolidon.

Die vernetzten Polymermikroteilchen können anionische oder kationische Gruppen tragen. Zu den für den anionischen oder kationischen Charakter der Polymermikroteilchen verantwortlichen Monomeren gehören im Falle der anionischen, olefinisch ungesättigten Verbindungen:

ungesättigte Carbon-, Sulfon- oder Phosphonsäuren wie (Meth-)Acrylsäure, Crotonsäure, Maleinsäure, Fumarsäure, Itakonsäure sowie die Halbester der drei letzteren, Vinylsulfonsäure, Acrylamidopropylmethansulfonsäure, Styrolsulfonsäure, (3-Sulfopropyl)-methacrylsäureester, Bis-(3-sulfonpropyl)-itaconsäureester, Vinylphosphonsäure, Acrylamidopropylmethanphosphonsäure bzw. deren Salze.

Zu den kationischen Monomeren gehören z. B. ungesättigte primäre, sekundäre und tertiäre Amine sowie quaternäre Alkylammoniumsalze z. B. Dimethylaminoneopentylmethacrylat, Dimethylaminoneopentylacrylat, Dimethylaminopropylmethacrylamid, Dimethylaminopropylacrylamid, Dimethylaminoethylmethacrylat, Dimethylaminoethylacrylat, 2-N-Morpholinoethylmethacrylat, 2-N-Morpholinoethylacrylat, tert.-Butylaminoethylmethacrylat, tert.-Butylaminoethylacrylat, Trimethylammoniumethylacrylatchlorid, Benzyldimethylammoniumethylmethacrylatphosphat, Trimethylammoniumneopentylacrylat-methosulfat, Acrylamidopropyltrimethylammonium-chlorid, Acrylamidoethyltrimethylammoniumglycolat, Diallyldimethylammonium-chlorid, ß-Acetamido-diethylaminoethylmethacrylat-chlorid.

Desweiteren können andere funktionelle Monomere mit Hydroxy-, Amid-, Silan- oder Epoxidgruppen mitverwendet werden z. B. Vinyltrimethoxysilan, Vinyltriethoxysilan, Methacryloxypropyltrimethoxysilan, Methacryloxypropyltris(methoxyethoxy)silan, Vinyltris(methoxyethoxy)silan, Vinyltriacetoxysilan, Hydroxyethylmethacrylat, Hydroxyethylacrylat, Hydroxypropylmethacrylat, Hydroxypropylacrylat, Polyhydroxyethylmethacrylat, Polyhydroxyethylacrylat, Acrylamid, Methacrylamid, N-Methylolacrylamid, N-Methylolmethacrylamid, N-Butoxymethylacrylamid, N-Butoxymethylmethacrylamid, N-Methoxymethylmethacrylamid, N-(3-Hydroxy-2,2-dimethylpropyl)(methacrylamid, t-Butylmethacrylamid.

Zur Vernetzung werden bei der Herstellung der Polymermikroteilchen zur Vernetzung befähigte Monomere verwendet, z. B. Di- oder Polyolefine, wie z. B. Triethylenglykoldimethacrylat, Allylmethacrylat, Divinylbenzol, Ethylenglykoldimethacrylat, Ethylenglykoldiacrylat, Butandioldimethacrylat, Butandioldiacrylat,

3

Triallylcyanurat, Melamin, Diallylphthalat, Bisphenol-A-diethylenglykoldimethacrylat, Isocyanatoethylmethacrylat, Methylenbismethacrylamid.

Bei der Herstellung der Dispersionen der Polymermikroteilchen können übliche geeignete nichtionische, anionische oder kationische Emulgatoren verwendet werden, in Konzentrationen von 0,1 - 7 Gew.-% wie z. B. aus der Gruppe der grenzflächenaktiven Umsetzungsprodukte von aliphatischen, cycloaliphatischen, aliphatisch-aromatischen, aromatischen Carbonsäuren, Alkoholen, sowie Blockcopolymerisate aus verschiedenen Epoxiden, wie z. B. Ethylenoxid und Propylenoxid. Ferner können übliche anionische Tenside, vorzugsweise z. B. tensioaktive Ammonium- sowie Alkalisalze von Fettsäuren (Seifen), Fettalkoholsulfaten, Isothionsäureäthern von Fettalkoholen, Alkansulfonaten, Alkylbenzolsulfonaten, (oxethylierten) Sulfobernsteinsäureestern, polyoxethylierten Fettalkoholsulfaten, Alkylphenol- oder (Alkyl-) Naphthylpolyoxethylsulfaten und Fettalkoholphosphaten zur Anwendung gelangen. Als weitere Emulgatoren kommen z. B. auch übliche grenzflächenaktive primäre, sekundäre und tertiäre Fettamine in Kombination mit organischen oder anorganischen Säuren sowie außerdem tensioaktive quaternäre Alkylammoniumverbindungen in Frage. Darüber hinaus können in manchen Fällen auch bekannte amphotere Tenside mit zwitterionischer Struktur, beispielsweise vom Betaintyp, wie z. B. Alkylamidopropylbetaine, vorteilhaft sein. Die genannten Emulgatoren können sowohl einzeln als auch, soweit sie miteinander verträglich sind, in Kombination untereinander oder miteinander in üblicher Weise verwendet werden.

Üblich bei der Emulsionspolymerisation ist auch die Verwendung von 0,1 - 5 Gew.-% Schutzkolloiden und zwar solche auf der Basis von hochmolekularen, HO-, $(R)_2N$-, $(R)_3{}^+$ N-, HOOC- oder ROOC-Gruppen tragenden organischen Verbindungen, wobei R z. B. vorzugsweise einen aliphatischen Rest mit 1 bis 8 C-Atomen bedeuten kann, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind solche von nichtionogener anionischer oder kationischer Struktur, wie z. B. Zelluloseäther, Polyvinylalkohole, Polysaccharide, Polyvinylpyrrolidone, wobei diese Verbindungen bevorzugt durch Aminogruppen, quaternäre Ammoniumgruppen, Carboxyl- bzw. Carboxylatgruppen sowie Alkylcarboxylgruppen (Estergruppen) substituiert sein können.

Zur Auslösung der Polymerisation bzw. Copolymerisation können bei der Herstellung erfindungsgemäßer Dispersionspolymerisate alle in der Emulsionspolymerisation üblichen, vorzugsweise wasserlöslichen und Radikalketten initiierenden Systeme, wie Azoverbindungen (Azoisobutyronitril), Peroxide (z. B. Benzoylperoxid), Perester (tert.-Butylperacetat) oder Percarbonate (Dicyclohexylperoxidicarbonat), die auch anionischer Natur sein können, verwendet werden. Bevorzugte Initiatoren sind wasserlösliche Verbindungen wie z. B. 2,2′-Azobis(2-amidinopropan)-dihydrochlorid, 2,2′-Azobis(N,N′-dimethylenisobutyramidin)-dihydrochlorid, 4,4′-Azobis-(4-cyanovalerian-säure), $H_2O_2$, tert.-Butylhydroperoxid, Persulfate wie Ammoniumpersulfat, Natriumpersulfat, Kaliumpersulfat, Redox-Systeme wie $H_2O_2$ und Ascorbinsäure, Peroxide und mehrwertige Metallsalze, tert.-Butylhydroperoxid und Rongalit, wobei Redox-Systeme vor allem zur Senkung des Restmonomergehaltes in der Nachreaktionsphase der Polymerisation vorteilhaft sein können, ferner energiereiche Strahlung sowie Photoinitiatoren.

Die vernetzten Polymerteilchen können anionische oder saure Gruppen (anionischer Charakter), kationische oder basische Gruppen (kationischer Charakter) enthalten oder nichtionischen Charakter besitzen. Den anodisch oder kathodisch abscheidbaren Elektrotauchlack-Überzugsmitteln können vernetzte Polymermikroteilchen mit anionischen, kationischen oder nichtionischem Charakter zugesetzt werden. Wenn die Mikroteilchen entgegengesetzt ionischen Charakter wie die für die elektrische Abscheidung verantwortlichen Bindemittel (Basisharze) des Elektrotauchlack-Überzugsmittels haben, kann es zu Ausfällungen, Ausflockungen oder ähnlichen Erscheinungen kommen. Diese Probleme können verhindert werden, falls z. B. die Einarbeitung in das Elektrotauchlackmaterial während der Herstellung erfolgt, wenn das ETL-Material praktisch kein oder wenig Wasser enthält, so daß eine gute Umhüllung der einzelnen Polymermikroteilchen mit dem ETL-Bindemittel ermöglicht wird, und/oder wenn der ionischen Charakter abgeschwächt wird und/oder wenn die Menge an Polymermikroteilchen mit ionischem Charakter im Elektrotauchlack-Bad verringert wird. Bevorzugt werden jedoch Polymermikroteilchen mit basischen oder kationischen Gruppen für kathodisch abscheidbare Elektrotauchlacke und mit sauren oder anionischen Gruppen für anodisch abscheidbare Elektrotauchlacke verwendet.

Die Polymermikroteilchen sind im wesentlichen frei von amphoionischen Gruppen, d. h. amphoionische Gruppen werden nicht absichtlich eingeführt. Sie können z. B. durch Hydrolyse und Initiatoren entstehen und liegen unter 200 μmol/g (0,2 mmol/g).

Die Teilchengröße der Polymermikroteilchen liegt zwischen 0,01 μm und 10 μm. Im sinne der Erfindung können Polymermikroteilchen mit gleicher Teilchengröße (monomodale Verteilung), mit 2 verschiedenen Teilchengrößen (bimodale Verteilung) oder mit mehreren verschiedenen Teilchengrößen (multimodale Verteilung) verwendet werden.

4

Es hat sich gezeigt, daß bei bimodaler oder multimodaler Verteilung der Teilchengrößen eine besonders gute Antikraterwirkung erzielt wird. Diese ist bei bimodaler Verteilung besonders günstig, wenn die beiden Sorten der Polymermikroteilchen im Gewichtsverhältnis von 1 : 3 bis 3 : 1, insbesondere von 1 : 1 vorhanden sind. Allgemein ist es günstig, wenn die innerhalb der bimodalen oder multimodalen Phase vorhandenen Teilchengrößen im Bereich einer Zehnerpotenz des Bereichs von 0,01 bis 10 μm, bevorzugt von 0,01 bis 2 μm, liegen, beispielsweise von 0,01 bis 0,1 μm, von 0,2 bis 2 μm oder von 1 bis 10 μm.

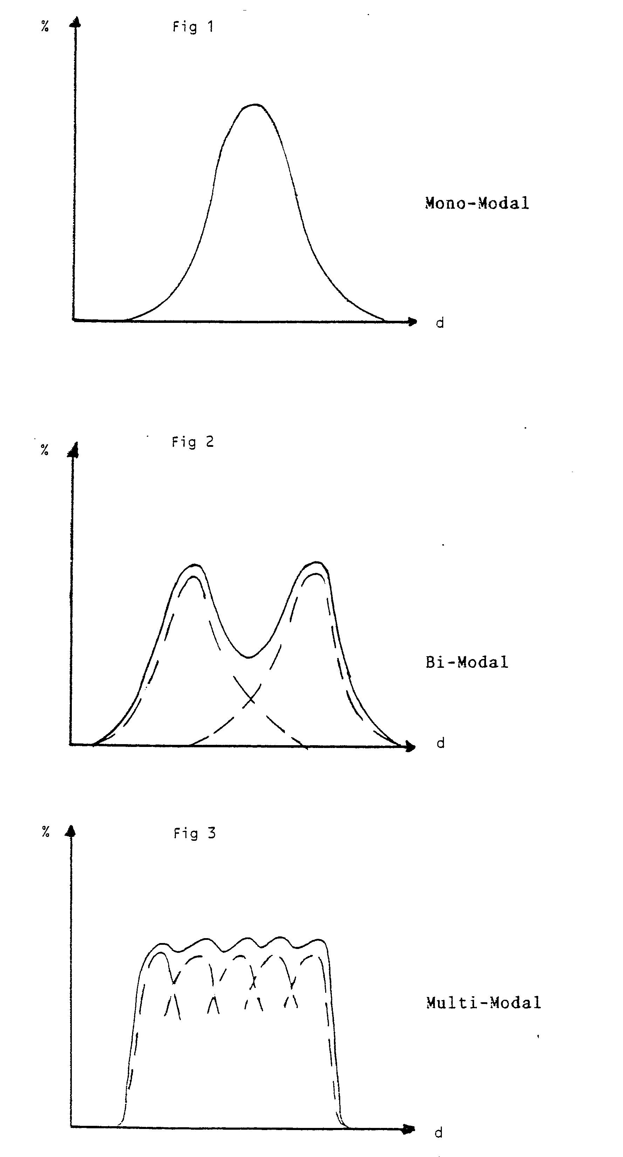

Die multi- oder bimodalen Verteilungen können z. B. erhalten werden durch Vermischen von verschiedenen einzelnen monomodalen Dispersionen in gewünschten Mengenverhältnissen. In der beigefügten Figur 1 wird ein typisches Beispiel für eine monomodale Verteilung der Teilchengrößen angegeben. In dieser Figur sowie auch in den Figuren 2 und 3 stellt d) an der Abszisse die Teilchengröße dar. An der Koordinate ist der Prozentsatz der enthaltenen Teilchen angegeben. Die Figur 2 stellt ein typisches Beispiel für eine bimodale Größenverteilung und die Figur 3 ein typisches Beispiel für eine multimodale Teilchengrößenverteilung dar. Die gemessene Verteilungsfunktion ist jeweils und Umhüllende der einzelnen Kurven.

Eine weitere Möglichkeit zur Herstellung von multi- oder bimodalen Verteilungen besteht in der Beeinflussung der entstehenden Verteilung bei der Herstellung der Dispersionen. So kann durch die günstige Wahl der Verfahrensparameter, wie z. B. die Zugabezeit der Ausgangsmaterialien (Monomeren) oder durch Additive die Teilchengrößenverteilung gezielt beeinflußt werden.

Die erfindungsgemäß eingesetzten Polymermikroteilchen weisen eine Glasübergangstemperatur (Tg) von unter +10°C auf. Die Glasübergangstemperatur kann durch beispielsweise Differential Scanning Calorimetry (DSC) bestimmt werden.

Die Teilchen mit der gewünschten Tg werden experimentell ermittelt. Hierzu kann es notwendig sein, die eingesetzten Monomeren zu variieren. Dabei ist es dem Fachmann geläufig, welche "harten" oder "weichen" Monomere eingesetzt werden können, um eine Erhöhung oder Verringerung der Tg eines Polymeren zu erzielen.

Bei der Berechnung der Vernetzungsdichte wird davon ausgegangen, daß alle polymerisierbaren Doppelbindungen reagieren und daß nach der Reaktion ein dreidimensionales Netzwerk entsteht.

Zur Berechnung der Vernetzungsdichte wird nur die Stoffmenge aller Monomeren mit zwei oder mehr Doppelbindungen pro Molekül herangezogen. Die Stoffmenge dieser vernetzenden Monomeren, angegeben in Millimol, welche in 1 g der gesmanten Monomermenge enthalten ist, wird errechnet. Die errechnete Zahl wird dann mit einem Faktor multipliziert, der erhalten wird, wenn man die Anzahl der polymerisierbaren Doppelbindungen pro Molekül des entsprechenden Monomeren um 1 vermindert.

Auf diese Weise erhält man die Vernetzungsdichte, welche in mmol/g angegeben wird.

Berechnungsbeispiele:

(Die %-Angaben beziehen sich auf Massenanteile)
A) Das zur Copolymerisation verwendete Monomergemisch besteht aus
10 % Glykoldiacrylat
40 % Ethylacrylat
50 % Butylacrylat.

Glykoldiacrylat (Molmasse 170 g/mol) ist im Monomergemisch mit 0,588 mmol/g enthalten. Da Glykoldiacrylat 2 polymerisierbare Doppelbindungen im Molekül enthält, wird die erhaltene Zahl mit (2 minus 1 =) 1 multipliziert.

Die Vernetzungsdichte beträgt demnach 0,588 mmol/g.
B) Das Monomergemisch besteht aus
6 % Trimethylolpropantriacrylat
40 % Ethylacrylat
54 % Butylacrylat.

Trimethylolpropantriacrylat (Molmasse 296 g/mol) ist mit 0,203 mmol/g enthalten. Es enthält 3 polymerisierbare Doppelbindungen im Molekül. Die erhaltene Zahl wird mit (3 minus 1 =) 2 multipliziert.

Die Vernetzungsdichte ist demnach 2 x 0,203 mmol/g, das sind 0,406 mmol/g.

Bei Gemischen von Monomeren mit 2 oder mehr Doppelbindungen pro Molekül ist die Vernetzungsdichte anteilweise aus den einzeln errechneten Vernetzungsdichten zu berechnen.

Der Gelanteil der Polymermikroteilchen, welcher nach bekannter Methode mit siedendem Aceton bestimmt wird (DE-C2-28 18 093, Spalte 5, Zeile 37-44 und EP-81-153 600, Seite 8, Zeile 18-20), liegt über 30 % Massenanteil, vorteilhaft über 50 % Massenanteil, bevorzugt über 70 % Massenanteil und besonders bevorzugt über 80 % Massenanteil.

Als Komponente a) der erfindungsgemäßen Überzugszusammensetzungen können übliche wäßrige Dispersionen von anodisch oder kathodisch abscheidbaren Harzen verwendet werden, die als Elektrotauchlacke bekannt sind. Elektrotauchlacke werden auch als ETL bezeichnet.

Die anodisch abscheidbaren Elektrotauchlacke werden als ATL, die kathodisch abscheidbaren als KTL bezeichnet.

ATL-Überzugsmittel enthalten saure Basisharze, deren Säurezahlen zwischen 35 bis 300 liegen können, und deren zahlenmittlere Molmasse zwischen 300 und 10 000 g/mol liegen kann. Als Säuregruppen treten $-PO_3H_2$, $-SO_3H$ und/oder bevorzugt $-COOH$ auf.

Basisharze sind Reaktionsprodukte aus Maleinsäureanhydrid mit trocknenden und halbtrocknenden fetten Ölen und mit synthetischen Ölen wie Polybutadienöl, Polyesterharze, Epoxidharzester, Polyurethanharze und Poly-(meth)acrylatharze. Die Basisharze können selbst- und fremdvernetzend sein. Als Vernetzungsmittel können Triazinharze, Phenolharze, und/oder blockierte Isocyanate eingesetzt werden.

KTL-Überzugsmittel enthalten basische Basisharze, deren Aminzahlen zwischen 20 und 250 liegen können, und deren zahlenmittlere Molmasse zwischen 300 und 10 000 liegen kann. Als basische Gruppen treten $-NH_2$, $-NRH$, $-NR_2$, $-NR_3^\ominus$, $-SR_2^\ominus$, $-PR_3^\ominus$. Bevorzugt sind stickstoffbasische Gruppen. Basisharze sind z. B. Aminoepoxidharze mit endständigen Doppelbindungen, Aminoacrylatharze, Aminopolyurethanharze und Mannichbasen auf Basis Bisphenol A, reaktivem Amin und Formaldehyd. Die Basisharze können selbst-und fremdvernetzend sein. Als Vernetzungsmittel eignen sich Triazinharze, blockierte Isocyanate, umesterungs- und umamidierungsfähige Vernetzer, Vernetzer mit endständigen Doppelbindungen und/oder zur Michael-Addition mit aktivierten Doppelbindungen fähige Vernetzer mit aktivem Wasserstoff. Die ATL- und KTL-Überzugsmittel enthalten gegebenfalls weitere übliche Lackrohstoffe wie Bindemittel ohne basische und saure Gruppen, Weichmacher, Pigmente, Füllstoffe, Lackpulver, Harzpulver, Additive und organische Lösungsmittel.

Die Erstellung der ETL-Bäder erfolgt in bekannter Art und Weise.

Eine spezielle KTL-Version ist Dickschicht-KTL, auch als D-KTL bezeichnet. Mit D-KTL werden Schichtdicken von 30 µm bis 50 µm bezeichnet, bei denen besonders häufig Krater auftreten. Die Eliminierung dieser Dickschicht-Krater gelingt sehr wirkungsvoll durch die Zugabe der erfindungsgemäßen Polymermikroteilchen.

Die Zugabemenge an Polymermikroteilchen richtet sich nach der Ursache und der Menge der Krater. Sie muß von Fall zu Fall durch eine Versuchsreihe mit ab-oder zunehmender Zugabemenge ermittelt werden, wobei beachtet werden muß, daß sich die Wirkung der erfindungsgemäßen Antikratermittel sofort oder erst nach ein bis zwei Tagen einstellen kann.

Die erfindungsgemäßen elektrisch abscheidbaren wäßrigen Tauchlack-Überzugsmittel werden für Einschichtlackierungen oder bevorzugt als Grundierung für Mehrschichtlackierungen verwendet.

Bei der Verwendung der erfindungsgemäßen ET-Überzugszusammensetzungen für Mehrschichtlackierungen kann auf die aufgebrachte Grundierung die weitere Beschichtung naß-in-naß oder nach dem Trocknen oder Härten der Grundierung erfolgen. Die Grundierungen können mit einem üblichen Füller beschichtet werden, wonach beispielsweise übliche Deck- und/oder Klarlacke aufgebracht werden. Derartige Lackaufbauten eignen sich insbesondere für die Lackierung von Kraftfahrzeugen bzw. Kraftfahrzeugteilen.

Alle Prozentangaben in den folgenden Herstellungsbeispielen und Beispielen beziehen sich, wenn nicht anders bezeichnet, auf Massenanteile.

Herstellungsbeispiel A

Die Emulsionspolymerisation wird entsprechend der allgemeinen Beschreibung aus
F. Hölscher, Dispersionen synthetischer Hochpolymerer, Teil I Springer Verlag Berlin 1969, Kapitel 2.1.6.:
Die Technik der Herstellung
durchgeführt.

Als Flotte wird ein Lösung eines quaternären Alkylammoniumchlorids und eines Copolymeren aus Vinylacetamid und Dioctylmaleinat in 660 g entsalztem Wasser vorgelegt. Die Monomermischung besteht aus 130 g Butylacrylat, 60 g Methylmethacrylat und 10 g Dimethylaminoneopentylacrylat. 30 g dieser Monomerenmischung werden in der Flotte vorgelegt und auf 60°C aufgeheizt. Die Polymerisation wird mit einem wasserlöslichen Azoinitiator gestartet und nach einer kurzen Vorpolymerisationsphase wird die restliche Monomerenmischung innerhalb 3 Stunden zudosiert. In die letzten 25% der Monomermischung fügt man 2 g Divinylbenzol zu. Nach Dosierende werden nochmals ein Teil des gleichen Initiators zugefügt und es wird 1,5 Stunden bei 70°C nachgeheizt.
Der fertige Polymerlatex hat einen Festkörpergehalt von 22% und einen pH-Wert von 7,5.

Die Glasübergangstemperatur (DSC) der Polymerteilchen liegt bei minus 10°C. Die Vernetzungsdichte liegt bei 0,08 mmol/g.

Die Mikropartikel sind zu ca. 80% vernetzt, was man durch 12 Stunden lang dauernde Extraktion der aus der Dispersion abzentrifugierten Partikel mit siedendem Aceton bestimmen kann.

Herstellungsbeispiel B

Wie im Herstellungsbeispiel A beschrieben, werden zu einer Flotte, die 3,5 g Copolymer aus Vinylacetamid und Dioctylmaleinat und 2 g eines Fettalkylammoniumsalzes in 600 g entsalztem Wasser enthält, 20 g einer Monomermischung aus 50 g Styrol, 134 g Butylacrylat und 9,5 g Dimethylaminoethylmethacrylat gegeben. Dann wird unter Rühren auf 80°C geheizt und die Polymerisation mit 0,4 g eines wasserlöslichen Azoinitiators gestartet.

Nach einer kurzen Zeit der Vorpolymerisation wird die restliche Monomermischung innerhalb von 3 Stunden gleichmäßig zugetropft, wobei man den letzten 25% Monomermischung 2 g Divinylbenzol zufügt.

Man gibt nach Dosierende nochmals einen Teil des gleichen Initiators zu und läßt bei 80°C 2 Stunden nachreagieren.

Nach dem Abkühlen wird mit Ameisensäure auf pH-Wert 4,5 eingestellt. Der Latex hat einen Festkörpergehalt von 21%. Die mittlere Teilchengröße beträgt ca. 3 µm. Die Glasübergangstemperatur (DSC) der Partikel liegt unter +10°C. Die Vernetzungsdichte liegt bei 0,08 mmol/g.

Herstellungsbeispiel C

Die Herstellung der Dispersion wird wie in Herstellungsbeispiel B durchgeführt.

Die Flotte besteht aus 660 g entsalztem Wasser, 4 g kationischem Emulgator und 1 g eines nichtionischen Emulgators (oxethyliertes Nonylphenol). Die Monomermischung besteht aus 55 g Methylmethacrylat, 136 g Butylacrylat und 9 g Dimethylaminoneopentylacrylat. Aufgeheizt wird die Flotte mit 20 g Monomermischung und zusätzlich mit 4,2 g Ameisensäure unter Stickstoff auf 60°C. Die Polymerisation wird mit 0,5 g Azoinitiator gestartet. Nach dem Anspringen der Polymerisation wird das restliche Monomergemisch innerhalb 2 Stunden zudosiert, wobei man zu den letzten 30% der Monomermischung 4,1 g Divinylbenzol gibt.

Nach Dosierende und Zugabe von 0,15 g des gleichen Initiators wird 1,5 Stunden bei 70°C nachpoly-merisiert und dann abgekühlt.

Der fertige Latex hat einen Festkörpergehalt von 23% und einen pH-Wert von 3,4. Die mittlere Teilchengröße der Partikel liegt bei 0,2 µm.

Die Glasübergangstemperatur (DSC) der Partikel liegt unter +10°C. Die Vernetzungsdichte liegt bei 0,15 mmol/g.

Herstellungsbeispiel D

Eine Dispersion mit bimodaler Teilchengrößenverteilung wird wie in Herstellungsbeispiel A hergestellt, jedoch mit der Änderung, daß nach der halben Monomerdosierung 2 g eines quaternären Fettalkylammoniumsalzes sowie 0,2 g des eingesetzten Azoinitiators zugegeben werden, beide in 10 g entsalztem Wasser gelöst. Anschließend wird die Polymerisation wie in Herstellungsbeispiel A fortgesetzt.

Der Latex hat einen Festkörpergehalt von 20% und einen pH-Wert von 7,9. In der Teilchengrößenverteilung der Partikel treten Maxima sowohl bei 0,05 µm als auch bei 0,51 µm auf.

Die Glasübergangstemperatur (DSC) der Partikel liegt unter +10°C. Die Vernetzungsdichte liegt bei 0,08 mmol/g.

Herstellungsbeispiel E

Eine Dispersion wird entsprechend dem Herstellungsbeispiel C hergestellt, jedoch mit der Änderung, daß die Menge Divinylbenzol (4,1 g) direkt in das gesamte Monomergemisch eingerührt und damit sofort mit den Monomeren zudosiert wird.

Der Festkörpergehalt, der pH-Wert und die mittlere Teilchengröße entsprechen der Dispersion des Herstellungsbeispiel C.
Die Glasübergangstemperatur (DSC) der Partikel liegt unter +10°C. Die Vernetzungsdichte liegt bei 0,15 mmol/g.

Herstellungsbeispiel F

Die Flotte besteht aus 1 g Natriumlaurylsulfat in 750 g entsalztem Wasser. Aus 750 g entsalztem Wasser, 375 g Ethylacrylat, 375 g Ethylmethacrylat, 375 g Butylacrylat, 375 g Butylmethacrylat, 120 g Acrylnitril, 30 g Acrylamid, 10 g Acrylsäure und 30 g Butandioldimethacrylat wird eine Voremulsion hergestellt.
Die Polymerisation wird bei 80°C durchgeführt. Das Initiatorsystem besteht aus 4,5 g Ammoniumperoxodisulfat in 150 g entsalztem Wasser.
Zur Flotte werden 50 g Voremulsion gegeben und nach dem Aufheizen auf 80°C werden zum Polymerisationsstart 50 g der Ammoniumperoxidisulfat-Lösung gegeben. Nach 15 Minuten werden die restliche Voremulsion und weitere 50 g der Ammoniumperoxodisulfat-Lösung in 3 Stunden parallel zudosiert. Nach einer weiteren Stunde erfolgt die Zugabe der restlichen 50 g Ammoniumperoxodisulfat-Lösung in einer Stunde. Der Ansatz wird abgekühlt.
Die feinteilige, koagulatfreie Dispersion hat einen Festkörpergehalt von 50% und einen pH-Wert von 2,5.
Die Glasübergangstemperatur (DSC) der Partikel liegt bei minus 5°C. Die Vernetzungsdichte liegt bei 0,08 mmol/g.

Herstellungsbeispiel G

391 g Diethanolamin, 189 g 3-(N,N-Dimethylamino)-propylamin und 1232 g eines Adduktes aus 2 mol Hexandiamin-1,6 und 4 mol Glycidylester einer verzweigten, tertiären $C_{10}$-Monocarbonsäure (Cardura® E 10; Epoxidäquivalentgewicht 250) werden zu 5273 g Bisphenol A - Epoxidharz (Epoxidäquivalentgewicht 472) in 3000 g Ethoxypropanol gegeben.
Das Reaktionsgemisch wird 4 Stunden unter Rühren bei 85 bis 90°C und dann 1 Stunde bei 120°C gehalten.
Anschließend wird mit Ethoxypropanol auf 60% Festkörpergehalt verdünnt.

Herstellungsbeispiel H

2262 g Bisphenol A - Epoxidharz (Epoxidäquivalentgewicht 260) werden in 2023 g Ethylglykolacetat bei 60°C gelöst und nach Zugabe von 0,8 g Hydrochinon und 2453 g eines Halbesters aus Tetrahydrophthalsäureanhydrid und Hydroxyethylmethacrylat auf 110°C erwärmt. Die Temperatur von 110°C wird so lange gehalten, bis die Säurezahl unter 3 mg KOH/g gesunken ist.
Dann wird das Reaktionsgut bei 65°C mit 3262 g einer 70%igen Lösung eines Monoisocyanates aus Toluylendiisocyanat und Dimethylethanolamin (Molverhältnis 1:1) in Ethylglykolacetat bis zu einem NCO-Wert von praktisch Null umgesetzt.
Anschließend wird mit Ethylglykolacetat auf 66% Festkörpergehalt verdünnt.

Herstellungsbeispiel I

768 g Trimellitsäureanhydrid und 2000 g eines Glycidylesters einer verzweigten, tertiären $C_{10}$-Monocarbonsäure (Cardura® E 10; Epoxidäquivalentgewicht 250) werden vorsichtig unter Rühren auf 190 Grad C erhitzt, wobei ab 90°C eine exotherme Reaktion beginnt. Das Reaktionsgut wird auf 140°C gekühlt und mit 2,75 g N,N-Dimethylbenzylamin versetzt.
Das Reaktionsgut wird bei 145°C gehalten bis die Säurezahl unter 3 mg KOH/g gesunken ist. Wenn notwendig, wird eine berechnete Menge Cardura® E 10 zusätzlich zugegeben.
Das Umesterungsvernetzungsmittel wird mit-2 Butoxyethanol auf 80% Festkörpergehalt verdünnt.

Herstellungsbeispiel J

Zu 431 g einer Lösung eines Polyfunktionellen Isocyanats, 75%ig in Ethylacetat, hergestellt aus 1 mol Trimethylolpropan und 3 mol Toluylendiisocyanat (Desmodur®L; NCO-Gehalt der Lösung beträgt 13%) werden bei 70°C vorsichtig portionsweise unter Rühren 160 g Caprolactam zugesetzt. Die Reaktionsmischung wird bei 70°C gehalten, bis der NCO-Gehalt auf praktisch Null gesunken ist.

Anschließend werden 204 g 2-Butoxyethanol zugegeben und ein Teil des Ethylacetats über eine Kolonne abdestilliert bis ein Festkörpergehalt von 70% erreicht wird.


Herstellungsbeispiel K

Gemäß DE-A-28 24 418, Herstellungsbeispiel A, werden 654 g Neopentylglykol und 136 g Trimethylolpropan in einem 2 l-Kolben mit Rührer und Kolonne aufgeschmolzen. Danach werden 271 g Isophthalsäure und 125 g Trimellithsäureanhydrid zugegeben. Unter Inertgas wird so auf 210°C geheizt, daß die Kolonnenkopftemperatur 102°C nicht überschreitet. Bei einer Säurezahl von 12 mg KOH/g Harz wird auf 150°C gekühlt. Anschließend wird ein Gemisch von 536 g Isodekanol und 778 g Trimellithsäureanhydrid zugegeben. Es wird auf 180°C geheizt und nach Erreichen einer Säurezahl von etwa 50 mit 2-Butanol auf einen Festkörpergehalt von 76% verdünnt.


Beispiel 1

Zu 915 g Bindemittellösung des Herstellungsbeispiels G werden 23 g 2-Ethylhexanol, 185 g 2,2,4-Trimethyl-1,3-pentandiolmonoisobutyrat, 413 g Hexamethoxymethylmelamin, 37 g basisches Bleisilikat, 11 g Ethoxypropanol, 4 g Ruß und 465 g Titandioxid unter einem schnell laufenden Dissolver zugegeben und auf einer Perlmühle vermahlen. Durch weitere Zugabe von 1860 g der Bindemittellösung des Herstellungsbeispiels G, 48 g 2-Ethylhexanol, 76 g Eisessig und 12963 g voll entsalztem Wasser unter Rühren werden 17 l KTL-Bad hergestellt.


Beispiel 1a

Aus 3 l KTL-Bad des Beispiels 1 werden zinkphosphatierte Stahlbleche beschichtet. Die Schichtdicke der bei 180°C 25 Minuten lang eingebrannten KTL-Beschichtungen beträgt 21 bis 23 μm. Die Oberfläche der eingebrannten Beschichtung ist voller Krater.


Beispiel 1b

In 3 l KTL-Bad des Beispiels 1 werden 68 g Dispersion des Herstellungsbeispiels A eingerührt. Nach Rühren über Nacht werden zinkphosphatierte Stahlbleche wie in Beispiel 1a beschichtet. Die Oberfläche der eingebrannten KTL-Beschichtungen ist kraterfrei. Die Steinschlagfestigkeit eines Dreischichtaufbaus und die PVC-Haftung auf KTL wird nicht verschlechtert, wie aus der Tabelle 1 zu ersehen ist.
Der Decklackstand hat sich gegenüber Beispiel 1a nicht verschlechtert.


Beispiel 1c

In 3 l KTL-Bad des Beispiels 1 werden 136 g Dispersion des Herstellungsbeispiels A eingerührt und zinkphosphatierte Bleche in der gleichen Weise wie in Beispiel 1b beschichtet. Die PVC-Haftung wird nicht verschlechtert und die Steinschlagfestigkeit wird verbessert (siehe Tabelle 1).
Der Decklackstand hat sich gegenüber Beispiel 1a nicht verschlechtert.


Beispiel 2

488 g Bindemittellösung des Herstellungsbeispiels G werden unter Rühren mit 12,5 g 2-Ethylhexanol, 72 g Hexamethoxymethylamin, 34 g 2,2,4-Trimethyl-1,3-pentandiolmonoisobutyrat vermischt.
Nach Zugabe von 13,5 g Eisessig unter Rühren wird mit 2380 g voll entsalztem Wasser ein KTL-Bad hergestellt.

Drei zinkphosphatierte Stahlbleche, welche 10 cm breit und 20 cm lang sind, werden kathodisch beschichtet und 25 Minuten lang bei 200°C eingebrannt. Die Schichtdicke soll 21 bis 23 µm betragen. Die Oberflächen der Beschichtungen sind voller Krater. In das KTL-Bad werden 68 g Dispersion des Herstellungsbeispiels A eingerührt. Nach Rühren über Nacht werden in der gleichen Art und Weise drei Stahlbleche beschichtet und eingebrannt wie vor der Zugabe der Dispersion A. Die Oberfläche der beschichteten Stahlbleche ist kraterfrei. Die PVC-Haftung ist nach Prüfung in der gleichen Weise wie in den Beispielen 1a bis 1c nicht schlechter als von den Beschichtungen ohne Dispersion A.

Beispiel 3

Aus 736 g Bindemittellösung des Herstellungsbeispiels G, 11 g 2-Etyhlhexanol, 140 g Umesterungsvernetzerlösung des Herstellungsbeispiels I, 18 g Bleioctoat (31% Bleigehalt), 18 g Ameisensäure, 50%ig in voll entsalztem Wasser, und 3077 g voll entsalztem Wasser wird ein KTL-Bad mit 4 l Gesamtvolumen angesetzt.

Beispiel 3a

In 4 l KTL-Bad des Beispiels 3 werden 2 g ASTM-Öl Nr. 1 (ASTM D 471) der Fa. Fuchs Mineraloelwerke GmbH, Mannheim, und 0,4 g Anticorrit 15N-68, ebenfalls von der Fa. Fuchs Mineraloelwerke GmbH, eingerührt. Das KTL-Bad wird über Nacht gerührt.

Aus 2 l des kontaminierten KTL-Bades werden zinkphosphatierte Stahlbleche beschichtet und 25 Minuten bei 180°C eingebrannt. Die Schichtdicke der eingebrannten Beschichtungen beträgt 18 bis 19 µm.

Die Oberfläche ist voller Krater.

Beispiel 3b

In 2 l des kontaminierten KTL-Bades des Beispiels 3a werden 91 g Dispersion des Herstellungsbeispiels A eingerührt. Das KTL-Bad wird noch einmal über Nacht gerührt.

Die in gleicher Weise wie in Beispiel 3a beschichteten und eingebrannten Testbleche haben kraterfreie Oberflächen.

Beispiel 4

Mahlgut

Zu 640 g Bindemittellösung des Herstellungsbeispiels K werden unter einem schnell laufenden Dissolver 286 g Titandioxid, 3,5 g Ruß und 70,5 g Aluminiumsilikat zugegeben und auf einer Perlmühle vermahlen.

ATL-Bad

Aus 632 g Mahlgut, 104 g Bindemittellösung des Herstellungsbeispiels K, 102 g Hexaalkoxymethylmelamin, 93%ig in Isobutanol, (die Alkoxygruppen des Hexaalkoxymethylmelamins bestehen aus Methoxygruppen und Isobutoxygruppen im Molverhältnis 8:2), 80 g Diester eines Bisphenol-A-Diglycidylesters (Epoxidäquivalentgewicht 190) mit Kokosvorlauffettsäure (Säurezahl 275 mg KOH/g), 40 g 2-Butanol, 96 g Diisopropanolamin und 6946 g voll entsalztem Wasser wird unter gutem Rühren ein 8 l - Bad mit anodisch abscheidbaren Elektrotauchlack (ATL-Bad) hergestellt.

Beispiel 4a

10

In 4 l ATL-Bad des Beispiels 4 werden 2 g ASTM-Öl Nr. 1 (siehe Beispiel 3a) durch Einrühren über Nacht gut verteilt.

Aus 2 l des kontaminierten Bades werden entfettete Stahlbleche anodisch beschichtet und 25 Minuten bei 175°C eingebrannt.

Die eingebrannte Beschichtung hat eine Schichtdicke von 27 bis 29 $\mu$m und ist voller Krater.

Beispiel 4b

In 2 l des kontaminierten Bades des Beispiels 4a werden 32 g Dispersion des Herstellungsbeispiels F eingerührt.

Nach Rühren über Nacht werden Stahlbleche wie in Beispiel 4a beschichtet und eingebrannt.

Die eingebrannten Beschichtungen sind kraterfrei.

Beispiel 4c

4 l des Bades aus Beispiel 4 werden unter Rühren 14 Stunden lang mit 168 cm² Tesaband 4331 der Fa. Beiersdorf AG, Hamburg, in Berührung gebracht.

Aus 2 l des kontaminierten Bades werden Stahlbleche wie in Beispiel 4a anodisch beschichtet und eingebrannt.

Die Oberfläche der Beschichtungen ist voller Krater.

Beispiel 4d

In 2 l des kontaminierten Bades aus Beispiel 4c werden wie in Beispiel 4b 32 g Dispersion des Herstellungsbeispiels F eingerührt, was ebenfalls zu kraterfreien Beschichtungsoberflächen führt.

Beispiel 5

Aus 731 g Bindemittellösung des Herstellungsbeispiels G, 11 g 2-Ethylhexanol, 245 g Vernetzerlösung des Herstellungsbeispiels J, 17 g Eisessig und 4996 g voll entsalztem Wasser werden 6 l KTL-Bad hergestellt.

Beispiel 5a

3 l Bad des Beispiels 5 werden wie in Beispiel 1a zur Beschichtung von zinkphosphatierten Stahlblechen verwendet und wie in Beispiel 1a eingebrannt.

Die Oberfläche der Beschichtung ist voller Krater.

Beispiel 5b

Nach Zugabe von 143 g Dispersion des Herstellungsbeispiels B werden nach Rühren über Nacht zinkphosphatierte Stahlbleche wie in Beispiel 5a beschichtet und eingebrannt.

Die Oberfläche ist kraterfrei.

Beispiel 6

Aus 1945 g Bindemittellösung des Herstellungsbeispiels H, 55 g Eisessig und 10000 g voll entsalztem Wasser werden 12 l KTL-Bad hergestellt.

Beispiel 6a

11

Aus 3 l KTL-Bad des Beispiels 6 werden zinkphosphatierte Stahlbleche beschichtet und 25 Minuten bei 180°C eingebrannt.
Die eingebrannte Beschichtung hat eine Schichtdicke von 20 bis 21 μm und ist voller Krater.

Beispiele 6b, 6c und 6d

In je 3 l KTL-Bad des Beispiels 6 werden
für Beispiel 6b 65 g Dispersion des Herstellungsbeispiels C,
für Beispiel 6c 75 g Dispersion des Herstellungsbeispiels D,
für Beispiel 6d 65 g Dispersion des Herstellungsbeispiels E eingerührt.
Nach Rühren über Nacht werden zinkphosphatierte Stahlbleche wie in Beispiel 6a beschichtet und eingebrannt.
Die Oberfläche der eingebrannten Beschichtungen sind kraterfrei.

TABELLE 1

Beispiel - Nummer

| Prüfergebnisse | 1a | 1b | 1c |
|---|---|---|---|
| Filmdicke in μm | 21 bis 23 | 21 bis 23 | 21 bis 23 |
| Krater 1) | 5 | 0 | 0 |
| Unterbodenschutz-haftung 2) | 1 | 0 bis 1 | 1 |
| Decklackstand 3) | gut | wie 1a | wie 1a |
| Steinschlagtest-ergebnisse 4) | 2 | 2 | 1 |
| VDA-Wechseltest 10 Runden 5) (VDA 621-415) | 2 | 2 | 1 |

1) Beurteilung der Kraterhäufigkeit von 0 (keine Krater) bis 5 (viele Krater).

2) Käufliche Unterbodenschutzmaterialien der Firmen Dekalin, Deutsche Klebstoffwerke GmbH, Hanau, Dr. A. Stankiewicz GmbH, Celle, und Teroson GmbH, Heidelberg, werden in 3 mm Schichtdicke auf die eingebrannte KTL-Grundierung aufgerakelt, unter den Einbrennbedingungen 10 Minuten Objekttemperatur und 140°C eingebrannt und eine Stunde später nach Anschneiden zwischen Grundierung und Unterbodenschutz mittels Abziehversuch per Hand geprüft.
0 bedeutet sehr gute Haftung und 5 bedeutet sehr schlechte Haftung.

EP 0 358 221 A2

3) Der Lackaufbau für die Prüfung des Decklackstandes besteht aus dem Füller des Beispiels 3 aus der EP-A-185 338 und dem Decklack des Beispiels 8 der EP-A-185 338.

Füllerspritzauftrag: 20 μm Trockenfilmdicke, einbrennen 25 Minuten bei 140°C.

Decklackspritzauftrag: 20 μm Trockenfilmdicke, einbrennen 25 Minuten bei 150°C.

4) Der Lackaufbau für die Prüfung des Steinschlagtests entspricht dem Lackaufbau 3). Der Steinschlagtest wird nach "SPLITT" durchgeführt, wie es in "Grundlagen der Steinschlagsimulation", Farbe + Lack, 1984, Heft 8, Seite 646 bis 653 beschrieben ist. 0 bedeutet in dieser Tabelle ein sehr gutes, 5 ein sehr schlechtes Ergebnis.

5) Für den Wechseltest wird jedes Testblech zur Hälfte mit Füller und Decklack (wie Lackaufbau 3) und zur Hälfte ohne Lackaufbau geprüft. 0 bedeutet in dieser Tabelle sehr geringe Unterwanderung am Schnitt und kein Flächenrost, 5 bedeutet sehr starke Unterwanderung und starker Flächenrost. T 31 758

Herberts Gesellschaft mit beschränkter Haftung
Christbusch 25
5600 Wuppertal 2

## Ansprüche

1. Verfahren zur Herstellung eines schlagfesten Überzugs auf einem leitfähigen Substrat, **dadurch gekennzeichnet,** daß man eine Überzugszusammensetzung enthaltend:
   a) eine wäßrige Dispersion eines oder mehrerer kathodisch oder anodisch abscheidbarer filmbildender Harze und
   b) 0,5 bis 30 Gew.-%, bezogen auf den Feststoffgehalt, an Polymermikroteilchen mit einer Teilchengröße von 0,01 bis 10 μm und einer Vernetzungsdichte von mindestens 0,05 mmol/g, wobei die Polymermikroteilchen eine Glasübergangstemperatur unter +10°C aufweisen, kathodisch oder anodisch auf dem Substrat abscheidet.

2. Verfahren nach Anspruch 1, dadurch gekennzeichnet, daß die Polymermikroteilchen in multimodaler Phase vorliegen.

3. Verfahren nach Anspruch 1 oder 2 zur Herstellung eines steinschlagfesten Lackaufbaues an Kraftfahrzeugen oder Kraftfahrzeugteilen, dadurch gekennzeichnet, daß der kathodisch oder anodisch auf einem metallischen Substrate abgeschiedene Überzug (naß-in-naß oder nach dem Trocknen) mit einem Füller beschichtet wird und anschließend übliche Deck- und/oder Klarlacke aufgebracht und gemeinsam eingebrannt werden.

4. Elektrotauchlack-Überzugszusammensetzung enthaltend:
   a) eine wäßrige Dispersion eines kathodisch oder anodisch abscheidbaren filmbildenden Harzes und
   b) 0,5 bis 30 Gew.-% bezogen auf den Feststoffgehalt, an Polymermikroteilchen mit einer Teilchengröße von 0,01 bis 10 μm und einer Vernetzungsdichte von mindestens 0,05 mmol/g, dadurch gekenn-

14

zeichnet, daß die Polymermikroteilchen eine Glasübergangstemperatur unter +10°C aufweisen und daß die Polymermikroteilchen in multimodaler Phase vorliegen.

5. Überzugszusammensetzung nach Anspruch 4, dadurch gekennzeichnet, daß die Polymermikroteilchen in bimodaler Phase vorliegen.

6. Überzugszusammensetzung nach Anspruch 4 oder 5, dadurch gekennzeichnet, daß die Teilchengrößen in der multimodalen bzw. bimodalen Phase innerhalb einer Zehnerpotenz des Bereichs von 0,01 bis 10 µm liegen.

7. Überzugszusammensetzung nach Anspruch 5 oder 6, dadurch gekennzeichnet, daß die beiden Sorten der Polymermikroteilchen im Gewichtsverhältnis 1 : 3 bis 3 : 1 vorhanden sind.

8. Überzugszusammensetzung nach einem der Ansprüche 4 bis 7, dadurch gekennzeichnet, daß die Oberflächen der Polymermikroteilchen im wesentlichen frei von amphoionischen Gruppen sind.

9. Verwendung der Überzugszusammensetzung nach einem der Ansprüche 4 bis 8 zur Herstellung von Steinschlagschutz-Grundierungen für Kraftfahrzeuge.

10. Verwendung von Polymermikroteilchen mit einer Teilchengröße von 0,01 bis 2 µm und einer Vernetzungsdichte von mindestens 0,07 mmol/g, die an der Oberfläche keinen amphoionischen Substituenten aufweisen, mit einer Glasübergangstemperatur unter +10°C, als Antikratermittel in Elektrotauchlack-Tauchbädern.

Fig 1

%

d

Mono-Modal

Fig 2

%

d

Bi-Modal

Fig 3

%

d

Multi-Modal